# EUROPEAN PATENT SPECIFICATION

(11) **EP 1 209 942 B1**
(45) Date of publication and mention of the grant of the patent: **19.10.2005**
(21) Application number: 01309782.9
(22) Date of filing: 21.11.2001
(51) Int. Cl.: H04Q 7/38

(54) **Base station for use in multi-network connection communication system and its connecting method**
Basisstation zur Benutzung in einem Kommunikationssystem mit mehreren Netzwerkanbindungen und Anschlussverfahren dafür
Station de base pour utilisation dans un système de communication avec plusieurs connexions vers réseaux et son procédé de connexion

(30) Priority: 22.11.2000 JP 2000356711
(43) Date of publication of application: 29.05.2002
(73) Proprietor: NTT DoCoMo, Inc., Tokyo 100-6150 (JP)
(72) Inventor: Sato, Hijin, Yokohama-shi, Kanagawa 234-0054 (JP); Umeda, Narumi, Yokohama-shi, Kanagawa 236-0052 (JP); Yamao, Yasushi, Yokohama-shi, Kanagawa 239-0822 (JP)
(74) Representative: Beresford, Keith Denis Lewis

(56) References cited:
- WO-A-98/45894
- US-A- 5 412 375
- US-A- 5 818 824
- US-A- 6 144 727
- GHAHERI NIRI S ET AL: "CORDLESS - CELLULAR NETWORK INTEGRATION FOR THE 3RD GENERATION PERSONAL COMMUNICATION SYSTEMS" VTC'98. 48TH. IEEE VEHICULAR TECHNOLOGY CONFERENCE. OTTAWA, CANADA, MAY 18 - 21, 1998, IEEE VEHICULAR TECHNOLOGY CONFERENCE, NEW YORK, NY: IEEE, vol. 1 CONF. 48, 18 May 1998 (1998-05-18), pages 402-408, XP000905883 ISBN: 0-7803-4321-2
- AIDAROUS S E ET AL: "SERVIVE MANAGEMENT IN INTELLIGENT NETWORKS" IEEE NETWORK, IEEE INC. NEW YORK, US, vol. 4, no. 1, 1990, pages 18-24, XP000113852 ISSN: 0890-8044
- JOHANSON R ET AL: "MOBILE ADVANTAGE WIRELESS OFFICE - A DIGITAL WIRELESS OFFICE SYSTEM FOR TDMA/136 NETWORKS" ON - ERICSSON REVIEW, ERICSSON. STOCKHOLM, SE, vol. 1, 1999, pages 20-27, XP000802523 ISSN: 0014-0171

## Description

The present invention relates to a base station for use in a multi-network connection communication system and its connecting method, and particularly to a base station for use in a multi-network connection communication system and its connecting method, in which the base station is connectable to both a carrier network and a private network.

Conventionally, a mobile communication carrier (such as NTT DoCoMo Inc.) installs a base station to establish connection to a carrier network. On the other hand, a private network is constructed individually by using a radio LAN technique or the like.

However, since a carrier network base station cannot be used as a private network base station, there is a problem in that the carrier and individual must make a duplicate investment.

Therefore, in consideration of the above mentioned problem, a concern of the present invention is to provide a base station for use in a multi-network connection communication system and its connecting method, wherein the base station is connectable to both a carrier network and a private network simultaneously.

US-A-5,818,824 describes a private cellular network for facilitating cellular communication for private mobile stations, public mobile stations, and hybrid mobile stations. The private cellular network includes a multiplexing circuit which is provided with intelligence to decide, based on a number of parameters, whether a public mobile switching centre or a private mobile switching centre should handle a given service request.

Aspects of the present invention are set out in the appended claims.

According to an embodiment there is provided a base station for use in a multi-network connection communication system comprising: means for making a decision as to whether a terminal is to be connected to a carrier network or a private network; and means for connecting the terminal to the carrier network or the private network in accordance with the decision result.

Here, the base station may further comprise means for assigning resources to the communication of the terminal in accordance with predetermined setting information.

Here, charges for the carrier network levied on an owner of the private network may be discounted in accordance with predetermined setting information.

Here, the predetermined setting information may be a maximum providing ratio for users of the carrier network and/or priority.

Here, the base station may be owned by a carrier that provides the carrier network.

Here, the base station may be owned by an owner of the private network.

In a further embodiment there is provided a connecting method for use in a base station for use in a multi-network connection communication system comprising the steps of: making a decision as to whether the a terminal is to be connected to a carrier network or a private network; and connecting the terminal to the carrier network or the private network in accordance with the decision result.

Here, the connecting method may further comprise the step of assigning resources to the communication of the terminal in accordance with predetermined setting information.

Here, charges for the carrier network levied on an owner of the private network may be discounted in accordance with predetermined setting information.

Here, the predetermined setting information may be a maximum providing ratio for users of the carrier network and/or priority.

Here, the base station may be owned by a carrier that provides the carrier network.

Here, the base station may be owned by an owner of the private network.

The foregoing configuration can provide the base station for use in the multi-network connection communication system and its connecting method connectable to both the carrier network and the private network simultaneously.

The above and other objects, effects, features and advantages of the present invention will become more apparent from the following description of embodiments thereof taken in conjunction with the accompanying drawings.
Fig. 1 is a diagram showing an implemented scheme of a multi-network connection communication system in accordance with an embodiment of the present invention;
Fig. 2 is a diagram showing another implemented scheme of a multi-network connection communication system in accordance with an embodiment of the present invention;
Fig. 3 is a diagram showing still another implemented scheme of a multi-network connection communication system in accordance with an embodiment of the present invention invention;
Fig. 4 is a functional block diagram showing a base station 100 in Figs. 1-3;
Fig. 5 is a flowchart illustrating an operation of the base station of the multi-network connection communication system in accordance with an embodiment of the present invention;
Fig. 6 is a flow diagram illustrating an operation for registering a mobile station or the like to be connected to the private network in the multi-network connection communication system in accordance with an embodiment of the present invention;
Fig. 7 is a flow diagram illustrating an operation for deleting the registration of a mobile station or the like to be connected to the private network in the multi-network connection communication system in accordance with an embodiment of the present invention;
Fig. 8 is a functional block diagram showing a private base station 100, which schematically shows its functions relevant to an embodiment of the present invention;
Fig. 9 is a flow diagram illustrating an operation of the base station of the multi-network connection communication system in accordance with an embodiment of the present invention;
Fig. 10 is a flow diagram illustrating an operation when the owner of the base station registers a maximum providing ratio and priority in the multi-network connection communication system in accordance with an embodiment of the present invention;
Fig. 11 is a flow diagram illustrating an operation for registering an owner and a user in the multi-network connection communication system in accordance with an embodiment of the present invention; and
Fig. 12 is a flow diagram illustrating an operation for changing setting of a password and the like in the multi-network connection communication system in accordance with an embodiment of the present invention.

Embodiments in accordance with the present invention will now be described with reference to the accompanying drawings.

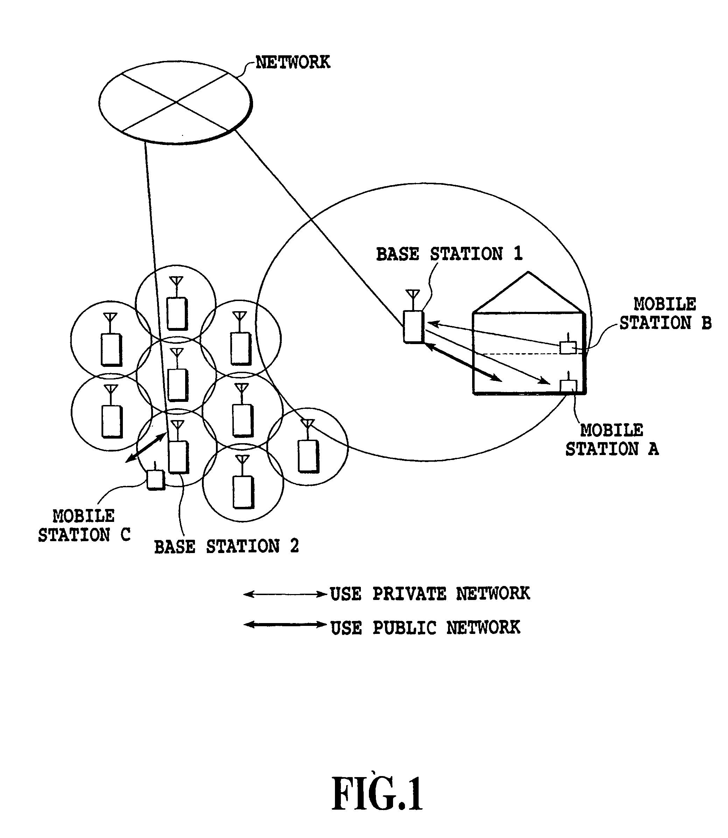

Fig. 1 is a diagram showing an implemented scheme of a multi-network connection communication system in accordance with an embodiment of the present invention, which shows only portions relevant to the present invention.

The multi-network connection communication system comprises at least a base station, a mobile station and a network. The network is a carrier network provided by a carrier such as a mobile switching network/mobile packet network like an IMT2000 system, GSM system and PDC/PDC-P system, a radio paging network, a local radio network such as Bluetooth, a PHS network, the Internet, an intranet, a LAN (including both wired and radio networks), a VAN, a public telephone network (including both analog and digital networks), a private network (including both analog and digital networks), a CATV network and a satellite communication network.

In the example as shown in Fig. 1, a mobile station A in a service area of a base station 1 communicates with a mobile station C in a service area of a base station 2 via a carrier network. The mobile station A is further connected with a mobile station B through a private network via the base station 1.

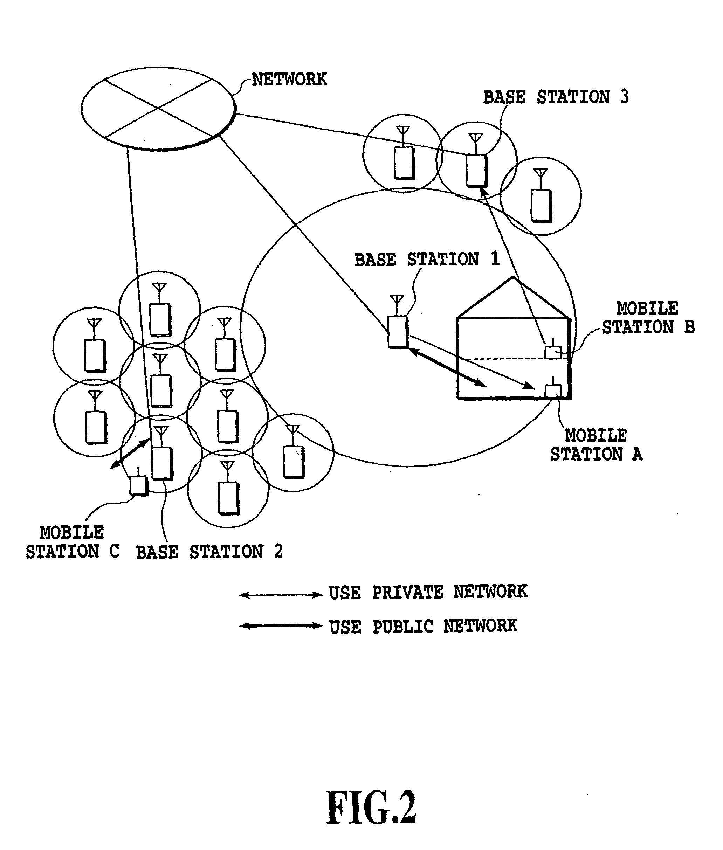

Fig. 2 is a diagram showing another implemented scheme of a multi-network connection communication system in accordance with an embodiment of the present invention, which shows only portions relevant to the present invention.

In the example as shown in Fig. 2, a mobile station A in a service area of a base station 1 communicates with a mobile station C in a service area of a base station 2 via a carrier network. The mobile station A is further connected with a mobile station B through a private network via the base station 1 and a base station 3.

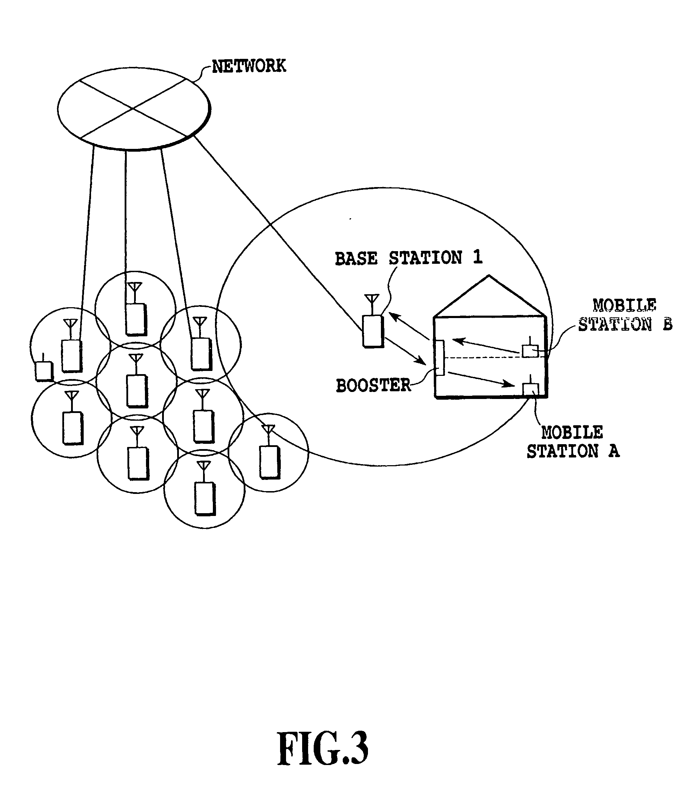

Fig. 3 is a diagram showing still another implemented scheme of a multi-network connection communication system in accordance with an anbodiment of the present invention, which shows only portions relevant to the present invention.

In the example as shown in Fig. 3, a mobile station A and a mobile station B in a service area of a base station 1 are connected through a private network (and a carrier network) via a booster.

Thus, the multi-network connection communication systems described in connection with Figs. 1-3 each comprise a base station simultaneously connectable to both the private network and carrier network. Utilizing the base station of the carrier as a base station of a private LAN makes it possible to obviate the LAN in the private equipment, and to efficiently use the base station with low availability.

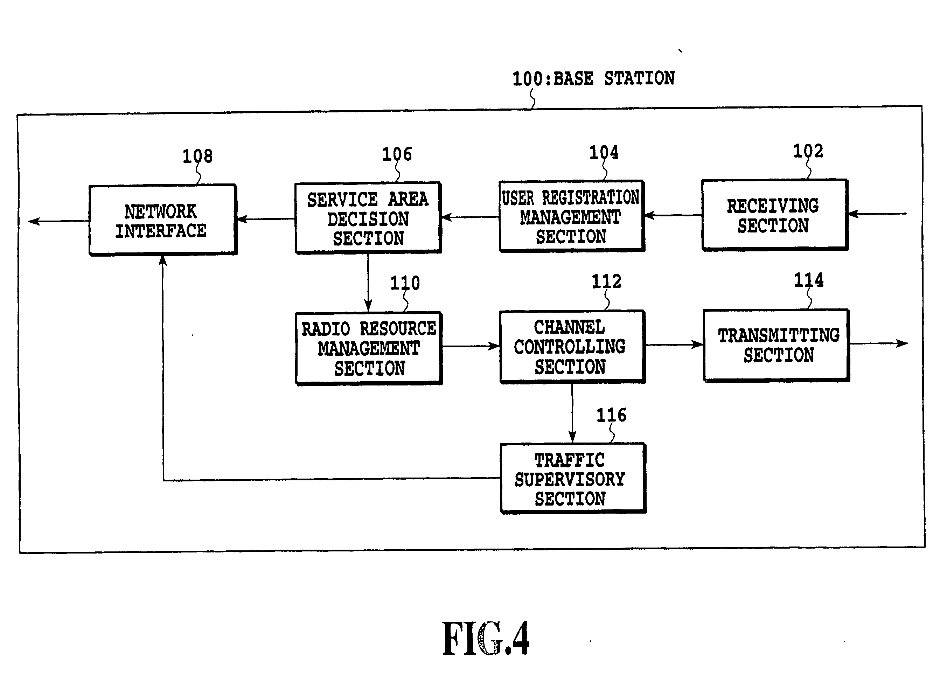

Fig. 4 is a functional block diagram showing an example of the base station 100 of Figs. 1-3, which shows only portions of the functions of the base station 100 that are relevant to the present embodiment.

The base station 100 comprises at least a receiving section 102 for receiving a signal from a mobile station or a carrier network; a user registration management section 104 for managing the registration of a mobile station that uses the base station as a private network; a service area decision section 106 for making a decision of a service area; a network interface 108 for establishing interface with the carrier network; a radio resource management section 110 for managing radio resources used for radio communication with a mobile station; a channel controlling section 112 for controlling channels used for the radio communication with a mobile station; a transmitting section 114 for transmitting a signal to the mobile station or the carrier network; and a traffic supervisory section 116 for monitoring the traffic for billing purposes or the like.

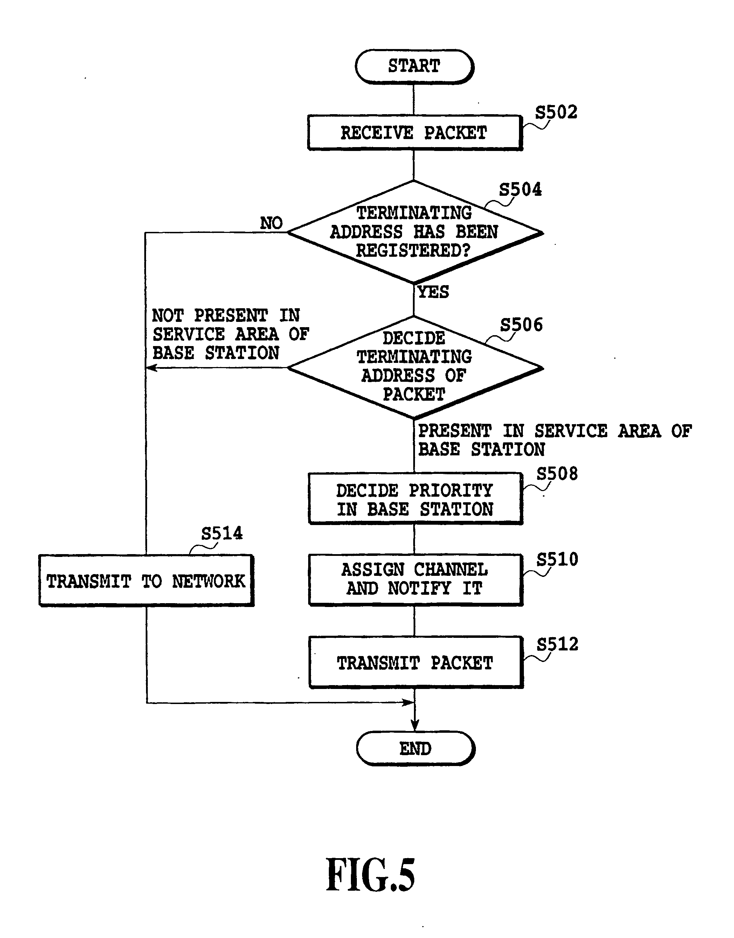

Next, an operation of the present embodiment of the multi-network connection communication system will be described with reference to Figs. 5-7.

Fig. 5 is a flowchart illustrating an operation of the base station of the multi-network connection communication system in accordance with the embodiment.

First, the receiving section 102 of the base station 100 receives a packet from the mobile station or the carrier network (step S502).

Subsequently, the user registration management section 104 of the base station 100 makes a decision as to whether the terminating address has been registered or not (step S504). When it has not yet registered, the base station 100 transmits the packet to the network (step S514), and then the packet is transmitted to another base station via a switching system and the like.

On the other hand, when the terminating address has been registered (step S504), the service area decision section 106 of the base station 100 makes a decision as to the terminating address of a received packet (step S506). When the terminating address is that of the mobile station that is not present in the area of the base station 100, the packet is transmitted to the network (step S514) so that it is sent to another base station via the switching system and the like.

On the other hand, when the terminating address is that of the mobile station currently present in the area of the base station 100, the radio resource management section 110 and channel controlling section 112 of the base station 100 assign the radio resources and a channel in accordance with the priority in the base station as will be described later (step S508), sends information about them to the mobile station (step S510), and transmits the packet to the mobile station (step S512).

Although the foregoing processing is carried out on a packet by packet basis, this is not essential. It can also be carried out using multiple packets as a unit.

Here, the decision of the priority and the assignment of the radio channel at steps S508 and S510 by the base station will be described.

First, as for the connection in the private network, that is, the connection within the base station, the lowest priority can be assigned as compared with other public services. Accordingly, during the congestion of the public services, the throughput of the traffic of the present services will be reduced. During the congestion of the traffic of the present services, the radio resources are equally assigned to terminals. When the services stretch over multiple base stations, they may be assigned an identifier indicating that it is a LAN packet, and handed over to the carrier network to which the base stations are connected. In this case, the switching system of the carrier network must have a routing function and the like.

To broadcast the distinction between the types of the base stations (such as the pros and cons of the private network services, and the pros and cons of the registration), the base station can transmit the information about that using a perch channel all the terminals can receive. Here, the perch channel is a carrier sense physical channel for a mobile station to carry out cell selection, and is subjected to special spread processing for enabling the mobile station to capture synchronization easily even in an inter-station asynchronous system. A base station that provides LAN services can transmit a signal for providing information about whether the current state is a registerable state or not in the same manner as the foregoing signal. Thus, the terminals can search for the base station, and make processing such as registration when it wishes to receive a service.

An example of a billing system will now be described in the multi-network connection communication system in accordance with an embodiment of the present invention. For example, as additional services, there are such billing systems for the private network connections as a free of charge system, a monthly flat-rate system, a monthly charge system after the initial use, and a monthly charge system in accordance with the traffic volume. The billing can be made by transmitting the traffic information from the traffic supervisory section 116 of the base station 100 to the carrier network so that an existing billing center can issue a billing to the user.

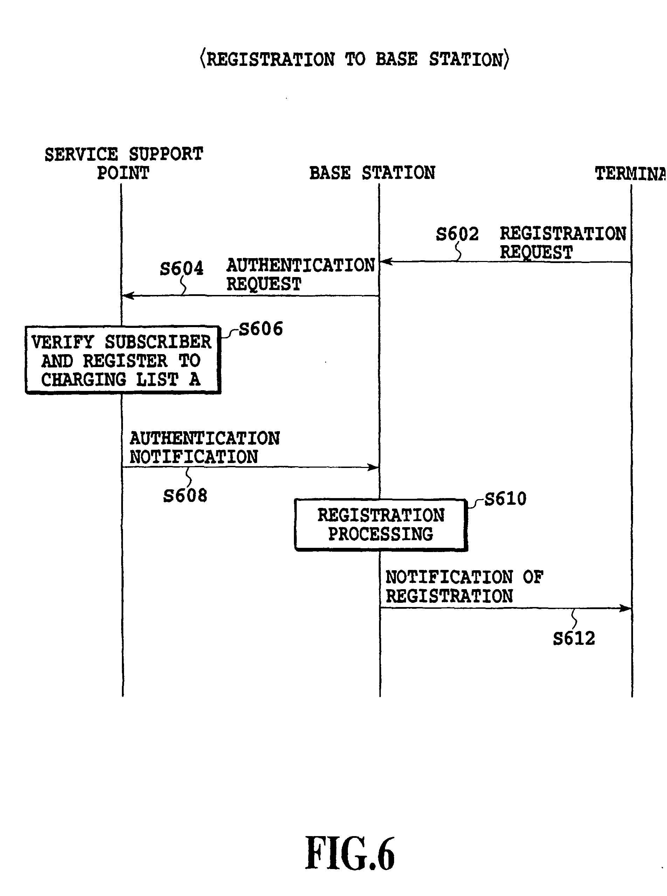

Fig. 6 is a flow diagram illustrating an operation of registering a mobile station or the like to be connected to the private network in the multi-network connection communication system in accordance with the embodiment.

First, a terminal sends a registration request to the base station (step S602).

Subsequently, the base station sends an authentication request for the terminal to a service support point in a carrier network such as M-SCP (step S604).

Subsequently, verifying the subscriber with reference to subscriber information, the service support point registers the subscriber in a charging list (step S606).

Subsequently, the service support point transmits the authentication to the base station (step S608).

Subsequently, the base station makes the registration (step S610), and transmits a registered notification to the terminal (step S612).

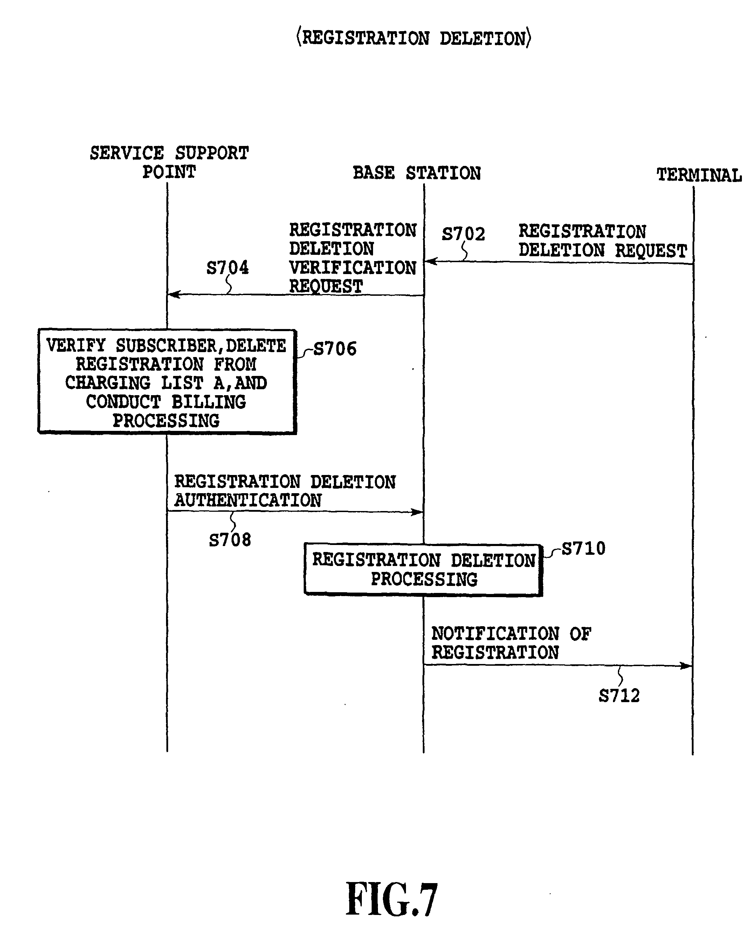

Fig. 7 is a flow diagram illustrating an operation of deleting the registration of a mobile station or the like to be connected to the private network in the multi-network connection communication system in accordance with the present embodiment.

First, the terminal sends a registration deletion request to the base station (step S702).

Subsequently, the base station sends a registration deletion confirmation request to the service support point in the carrier network such as M-SCP (step S704).

Subsequently, referring to the subscriber information and the like, the service support point verifies the subscriber, and deletes it from the charging list (step S706).

Subsequently, the service support point transmits a registration deletion authorization to the base station (step S708).

Subsequently, the base station makes the registration deletion (step S710), and transmits a registered notification to the terminal (step S712).

### (Embodiment Where Private Entity Owns Base Station)

An embodiment will now be described which includes a base station belonging not to the carrier but to a private entity in the foregoing embodiment.

A "private entity" owns a base station simultaneously connectable to both the private network and carrier network. Thus offering public services of the carrier using the private base station, the private entity enables the public to effectively use the resources of the private network. As compensation, it can receive discounts of the communication charges for the carrier network. When the private entity possesses the base station in its facilities such as a domed stadium, a station and a restaurant, the public services become available even in locations where it is difficult for the carrier to install the base station, thereby increasing the service area. In addition, this makes it possible to provide a more advanced seamless communication environment.

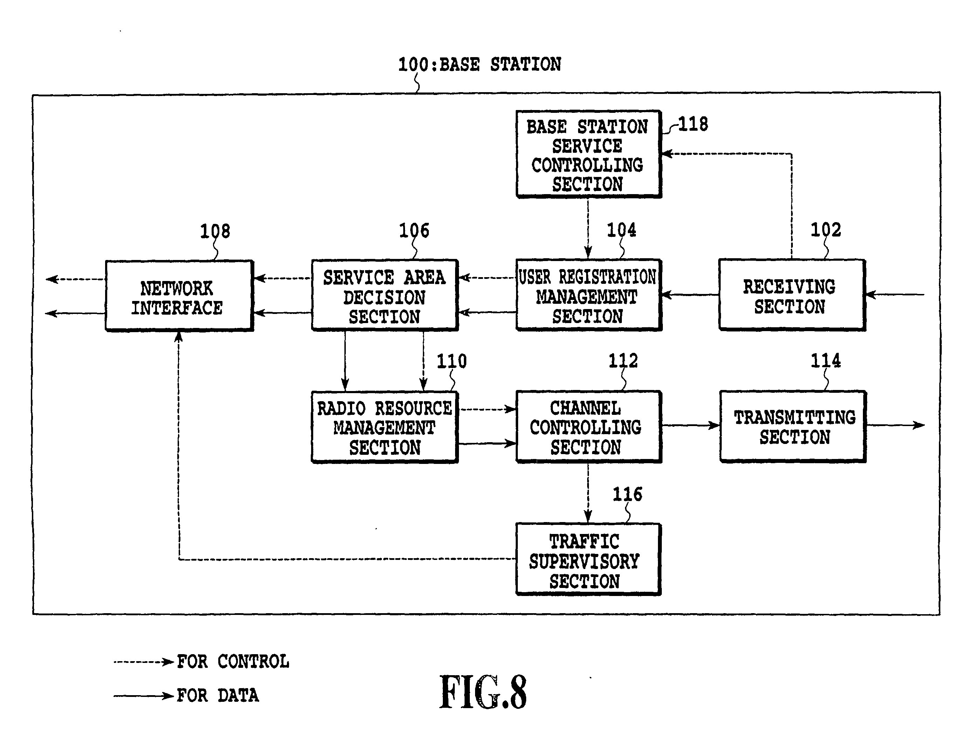

Fig. 8 is a functional block diagram showing an example of a private base station 100, which shows only portions of the functions of the base station 100 that are relevant to the present embodiment.

The base station 100 comprises at least a receiving section 102 for receiving a signal from a mobile station or a carrier network; a base station service controlling section 118 for controlling the entire services of the base station and carries out the processing such as authentication; a user registration management section 104 for managing the registration of a mobile station that uses the base station as a private network; a service area decision section 106 for making a decision of a service area; a network interface 108 for establishing interface with the carrier network; a radio resource management section 110 for managing radio resources used for radio communication with a mobile station; a channel controlling section 112 for controlling channels used for the radio communication with the mobile station; a transmitting section 114 for transmitting a signal to the mobile station or the carrier network; and a traffic supervisory section 116 for monitoring the traffic for billing purposes or the like.

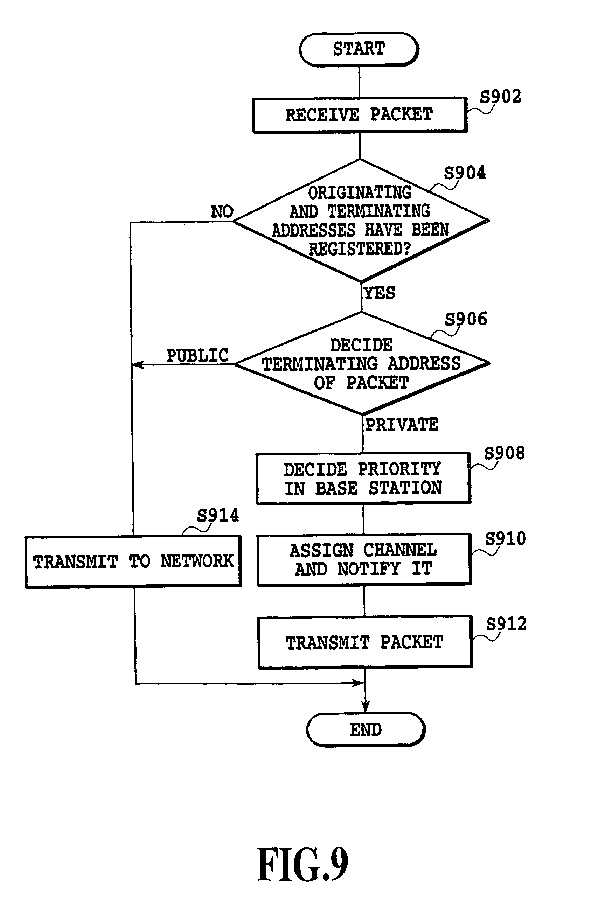

Next, an operation of the present embodiment of the multi-network connection communication system will be described with reference to Figs. 9-12.

Fig. 9 is a flowchart illustrating an operation of the base station of the multi-network connection communication system in accordance with the embodiment.

First, the receiving section 102 of the base station 100 receives a packet from the mobile station or the carrier network (step S902).

Subsequently, the user registration management section 104 of the base station 100 makes a decision as to whether the originating address and terminating address have been registered or not (step S904). When they have not yet been registered, the base station 100 transmits the packet to the network (step S914), and the packet is transmitted to another base station via a switching system and the like.

On the other hand, when the originating address and terminating address have been registered (step S904), the service area decision section 106 of the base station 100 makes a decision as to the terminating address of a received packet (step S906). When the terminating address is that of the mobile station that is not present in the area of the base station 100, the packet is transmitted to the network (step S914) so that it is sent to another base station via the switching system and the like.

On the other hand, when the terminating address is that of the mobile station currently present in the area of the base station 100, the radio resource management section 110 and channel controlling section 112 of the base station 100 assign the radio resources and a channel in accordance with the priority in the base station as will be described later (step S908), sends information about them to the mobile station (step S910), and transmits the packet to the mobile station (step S912).

Although the foregoing processing is carried out on a packet by packet basis, this is not essential. It can also be carried out using multiple packets as a unit.

Next, the outline of the operation of the multi-network connection communication system in accordance with the embodiment will be described.

First, as described later, it sets a maximum providing ratio for users of the carrier network (a maximum ratio at which the resources are assigned to the carrier network), priority, an owner and a user. Here, the term "owner" refers to the owner of the private network who can set supervisor mode about the private network. The term "user" refers to a person who carries out the private network connection. It is possible to set a plurality of users as "user", and it is possible to use the network as the private network between the users.

Subsequently, at the network connection, the setting values of the maximum providing ratio and the priority are reported first. At the update, the same operation is made. Then, the base station is loaded with a browser so that the browser can verify the setting values reported.

Subsequently, the user sets setting values on the personal computer via the terminal.

Subsequently, the base station conducts channel control in accordance with the set values. For example, it sets the priority at 40% for the public services, and 60% for the private use. Considering the priority, it can be assigned to the private first and then to the public, or vice versa, for example. Alternatively, it is not necessary to assign the priority. The base station can make the radio channel assignment in accordance with the maximum providing ratio, or with the setting values of the priority.

An example of the billing system of the multi-network connection communication system in accordance with an embodiment of the present invention will now be described. For example, as for the owner of the base station, the basic charge or communication charges can be reduced in accordance with the maximum providing ratio and/or the priority.

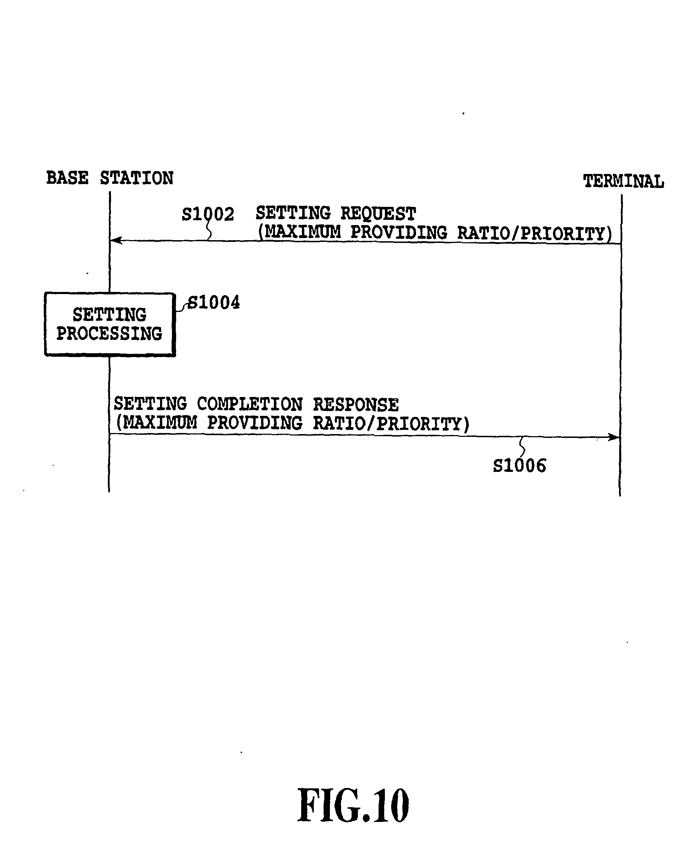

Fig. 10 is a flow diagram illustrating an operation when the owner of the base station registers the maximum providing ratio and priority in the multi-network connection communication system in accordance with the embodiment.

First, the terminal sends to the base station a setting request of the maximum providing ratio and priority (step 1002).

Subsequently, the base station carries out the setting processing of the maximum providing ratio and priority (step S1004), and transmits a setting completion response to the terminal (step S1006).

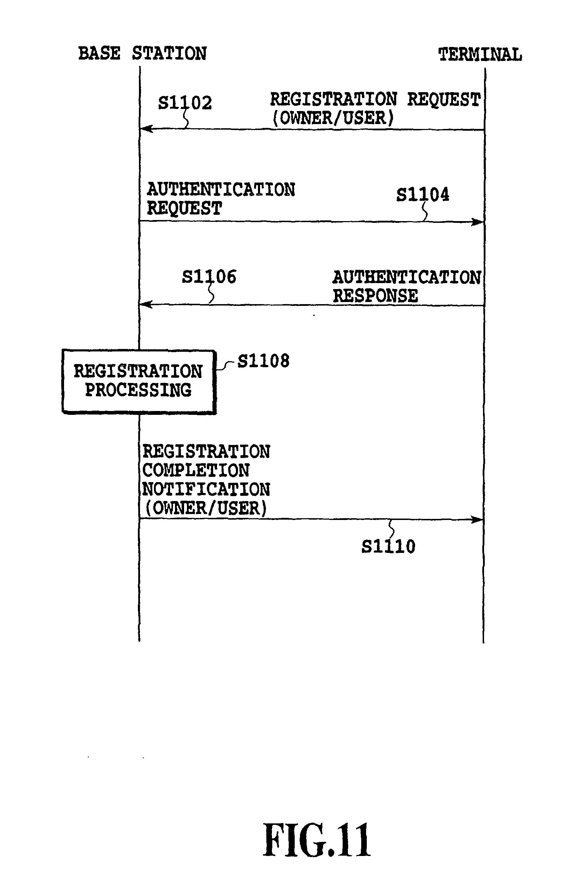

Fig. 11 is a flow diagram illustrating an operation of registering the owner and user in the multi-network connection communication system.

First, the terminal sends a registration request of the owner and the user to the base station (step S1102).

Subsequently, the base station sends an authentication request to the terminal (step S1104).

Subsequently, the terminal sends an authentication response to the base station (step S1106).

Subsequently, the base station registers the owner and user (step S1108), and transmits a registered notification to the terminal (step S1110).

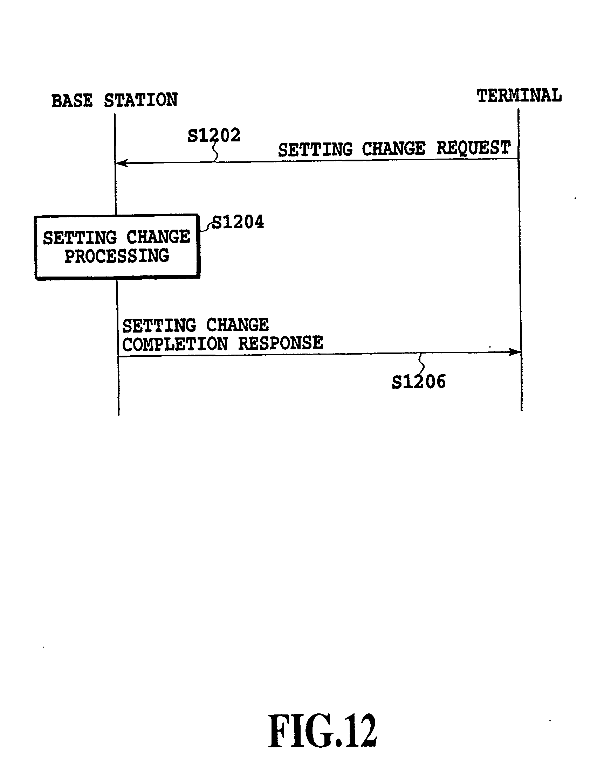

Fig. 12 is a flow diagram illustrating an operation of changing setting of a password and the like in the multi-network connection communication system in accordance with the present invention.

First, the terminal requests the base station to change the setting (step S1202).

Subsequently, the base station conducts the setting change processing (step S1204), and transmits the setting change completion response to the terminal (step S1206).

### (OTHER EMBODIMENTS)

Although the foregoing embodiments are described on the assumption that they are implemented independently, this is not essential:
It is obvious to those skilled in the art that they can be combined in various ways to implement other embodiments.

In addition, although the foregoing embodiments are described by way of example that employs the IMT2000 system or PDC/PDC-P system of NTT DoCoMo Inc. as the mobile telephone network/mobile packet network, this is not essential. For example, they can be applied to other mobile telephone networks/mobile packet networks with different radio system to implement other embodiments.

Furthermore, although the foregoing embodiments are described by way of example of services and systems of the NTT DoCoMo Inc., this is not essential. For example, they can be applied to other services and systems of other companies with similar functions to implement other embodiments.

Moreover, various changes and modifications can be implemented other than the foregoing embodiments.

As described above, embodiments can provide the base station for use in the multi-network connection communication system and its connecting method capable of obviating the need of the LAN equipment in the private system and to increase the efficiency of the base station with low availability, by installing the base station that is connectable simultaneously to both the private network and carrier network, and by using the carrier base station as the base station for the private LAN.

In addition,
offering public services of the carrier using the private base station, the private entity enables the public to effectively use the resources of the private network. As compensation, it can receive discounts of the communication charges for the carrier network. When the private entity possesses the base station in its facilities such as a domed stadium, station and restaurant, the public services become available even in locations where it is difficult for the carrier to install the base stations, thereby increasing the service area.

Furthermore, the embodiments can provide a more advanced seamless communication environment.

## Claims

1. A base station (100) for use in a multi-network connection communication system **characterized by** comprising:
connection decision means (104,106) for making a decision as to whether a mobile station is to be connected to a carrier network or a private network; and
means (108,114) for connecting said mobile station to said carrier network or said private network in accordance with the decision result,
wherein said base station further comprises:
means (102) for receiving a signal from a mobile station or the carrier network; and
means (104) for managing registration of mobile stations that use the base station as the private network,
wherein said connection decision means is operable to decide based on the registration of mobile stations, whether the signal is to be transmitted to a mobile station or the carrier network, and
said means for connecting is operable to transmit the signal to the mobile station or the carrier network based on the decision result of said connection decision means.

2. The base station as claimed in claim 1, wherein
said base station further comprises service area decision means (106) for making a decision of a service area based on the signal, and
said connection decision means is operable to decide based on the registration of mobile stations and the decision result of said service area decision means, whether the signal is to be transmitted to a mobile station or the carrier network.

3. The base station as claimed in claim 1 or 2, wherein said connection decision means is operable to transmit the signal to the carrier network, if a mobile station which is a destination of the signal is not registered in said means for managing.

4. The base station as claimed in any one of claims 1 to 3, wherein said means for receiving receives a signal from a mobile station.

5. The base station as claimed in any one of claims 1 to 3, wherein said means for receiving receives a signal from the carrier network.

6. The base station as claimed in any one of claims 1 to 5, wherein
said base station further comprises means (102) for receiving a registration request for using the base station as the private network from a mobile station, and
said means for managing manages registration of the mobile station which transmits the registration request.

7. A connecting method for use in a base station (100) for use in a multi-network connection communication system, the base station comprising means (104) for managing registration of mobile stations that use the base station as a private network, said method **characterized by** comprising:
a connection decision step of making a decision as to whether a mobile station is to be connected to a carrier network or the private network; and
a step of connecting said mobile station to said carrier network or said private network in accordance with the decision result,
wherein said method further comprises a step (S502) of receiving a signal from a mobile station or the carrier network,
wherein said connection decision step decides (S504) based on the registration of mobile stations, whether the signal is to be transmitted to a mobile station or the carrier network, and
said step of connecting transmits (S512) the signal to the mobile station or the carrier network based on the decision result of said connection decision step.

8. The method as claimed in claim 7, wherein
said method further comprises a service area decision step (S506) of making a decision of a service area based on the signal, and
said connection decision step decides based on the registration of mobile stations and the decision result of said service area decision step, whether the signal is to be transmitted to a mobile station or the carrier network.

9. The method as claimed in claim 7 or 8, wherein said connection decision step transmits the signal to the carrier network, if a mobile station which is destination of the signal is not registered in said means for managing.

10. The method as claimed in any one of claims 7 to 9, wherein said step of receiving receives a signal from a mobile station.

11. The method as claimed in any one of claims 7 to 9, wherein said step of receiving receives a signal from the carrier network.

12. The method as claimed in any one of claims 7 to 11, wherein
said method further comprises a step (S602) of receiving a registration request for using the base station as the private network from a mobile station, and
said means for managing manages (S610) registration of the mobile station which transmits the registration request.

13. A multi-network connection communication system comprising a base station, said base station **characterized by** comprising:
connection decision means (104, 106) for making a decision as to whether a mobile station is to be connected to a carrier network or a private network; and
means (108,114) for connecting said mobile station to said carrier network or said private network in accordance with the decision result,
wherein said system further comprises:
means (102) for receiving a signal from a mobile station or the carrier network; and
means (104) for managing registration of mobile stations that use the system as the private network,
wherein said connection decision means is operable to decide based on the registration of mobile stations, whether the signal is to be transmitted to a mobile station or the carrier network, and
said means for connecting is operable to transmit the signal to the mobile station or the carrier network based on the decision result of said connection decision means.

## Patentansprüche

1. Basisstation (100) zur Verwendung in einem Multinetzwerkverbindungs-Kommunikationssystem, die **gekennzeichnet ist durch**:
eine Verbindungsentscheidungseinrichtung (104, 106) zum Treffen einer Entscheidung, ob eine Mobilstation mit einem Trägernetzwerk oder einem privaten Netzwerk zu verbinden ist, und
eine Einrichtung (108, 114) zur Verbindung der Mobilstation mit dem Trägernetzwerk oder dem privaten Netzwerk gemäß dem Entscheidungsergebnis,
wobei die Basisstation ferner umfasst:
eine Einrichtung (102) zum Empfang eines Signals von einer Mobilstation oder dem Trägernetzwerk, und
eine Einrichtung (104) zur Verwaltung einer Registrierung von Mobilstationen, die die Basisstation als das private Netzwerk verwenden,
wobei die Verbindungsentscheidungseinrichtung zur Entscheidung, ob das Signal zu einer Mobilstation oder dem Trägernetzwerk zu übertragen ist, auf der Grundlage der Registrierung von Mobilstationen betreibbar ist und
die Einrichtung zur Verbindung zur Übertragung des Signals zu der Mobilstation oder dem Trägernetzwerk auf der Grundlage des Entscheidungsergebnisses der Verbindungsentscheidungseinrichtung betreibbar ist.

2. Basisstation gemäß Anspruch 1, wobei
die Basisstation ferner eine Dienstbereichsentscheidungseinrichtung (106) zum Treffen einer Entscheidung eines Dienstbereichs auf der Grundlage des Signals umfasst, und
die Verbindungsentscheidungseinrichtung zur Entscheidung, ob das Signal zu einer Mobilstation oder dem Trägernetzwerk zu übertragen ist, auf der Grundlage der Registrierung von Mobilstationen und des Entscheidungsergebnisses der Dienstbereichsentscheidungseinrichtung betreibbar ist.

3. Basisstation gemäß Anspruch 1 oder 2, wobei die Verbindungsentscheidungseinrichtung zur Übertragung des Signals zu dem Trägernetzwerk betreibbar ist, wenn eine Mobilstation, die ein Ziel des Signals ist, nicht in der Einrichtung zur Verwaltung registriert ist.

4. Basisstation gemäß einem der Ansprüche 1 bis 3, wobei die Einrichtung zum Empfang ein Signal von einer Mobilstation empfängt.

5. Basisstation gemäß einem der Ansprüche 1 bis 3, wobei die Einrichtung zum Empfang ein Signal von dem Trägernetzwerk empfängt.

6. Basisstation gemäß einem der Ansprüche 1 bis 5, wobei
die Basisstation ferner eine Einrichtung (102) zum Empfang einer Registrierungsanforderung zur Verwendung der Basisstation als das private Netzwerk von einer Mobilstation umfasst, und
die Einrichtung zur Verwaltung eine Registrierung der die Registrierungsanforderung übertragenden Mobilstation verwaltet.

7. Verbindungsverfahren zum Verwenden in einer Basisstation (100) zur Verwendung in einem Multinetzwerkverbindungs-Kommunikationssystem, wobei die Basisstation eine Einrichtung (104) zur Verwaltung einer Registrierung von Mobilstationen umfasst, die die Basisstation als ein privates Netzwerk verwenden, wobei das Verfahren **gekennzeichnet ist durch**:
einen Verbindungsentscheidungsschritt des Treffens einer Entscheidung, ob eine Mobilstation mit einem Trägernetzwerk oder dem privaten Netzwerk zu verbinden ist, und
einen Schritt des Verbindens der Mobilstation mit dem Trägernetzwerk oder dem privaten Netzwerk gemäß dem Entscheidungsergebnis,
wobei das Verfahren ferner einen Schritt (S502) des Empfangens eines Signals von einer Mobilstation oder dem Trägernetzwerk umfasst,
wobei der Verbindungsentscheidungsschritt auf der Grundlage der Registrierung von Mobilstationen entscheidet (S504), ob das Signal zu einer Mobilstation oder dem Trägernetzwerk zu übertragen ist, und
der Schritt des Verbindens das Signal zu der Mobilstation oder dem Trägernetzwerk auf der Grundlage des Entscheidungsergebnisses des Verbindungsentscheidungsschritts überträgt (S512).

8. Verfahren gemäß Anspruch 7, wobei
das Verfahren ferner einen Dienstbereichsentscheidungsschritt (S506) des Treffens einer Entscheidung eines Dienstbereichs auf der Grundlage des Signals umfasst, und
der Verbindungsentscheidungsschritt auf der Grundlage der Registrierung von Mobilstationen und des Entscheidungsergebnisses des Dienstbereichsentscheidungsschritts entscheidet, ob das Signal zu einer Mobilstation oder dem Trägernetzwerk zu übertragen ist.

9. Verfahren gemäß Anspruch 7 oder 8, wobei der Verbindungsentscheidungsschritt das Signal zu dem Trägernetzwerk überträgt, wenn eine Mobilstation, die Ziel des Signals ist, nicht in der Einrichtung zur Verwaltung registriert ist.

10. Verfahren gemäß einem der Ansprüche 7 bis 9, wobei der Schritt des Empfangens ein Signal von einer Mobilstation empfängt.

11. Verfahren gemäß einem der Ansprüche 7 bis 9, wobei der Schritt des Empfangens ein Signal von dem Trägernetzwerk empfängt.

12. Verfahren gemäß einem der Ansprüche 7 bis 11, wobei
das Verfahren ferner einen Schritt (S602) des Empfangens einer Registrierungsanforderung zum Verwenden der Basisstation als das private Netzwerk von einer Mobilstation umfasst, und
die Einrichtung zur Verwaltung eine Registrierung der die Registrierungsanforderung übertragenden Mobilstation verwaltet (S610).

13. Multinetzwerkverbindungs-Kommunikationssystem mit einer Basisstation, wobei die Basisstation **gekennzeichnet ist durch**:
eine Verbindungsentscheidungseinrichtung (104, 106) zum Treffen einer Entscheidung, ob eine Mobilstation mit einem Trägernetzwerk oder einem privaten Netzwerk zu verbinden ist, und
eine Einrichtung (108, 114) zur Verbindung der Mobilstation mit dem Trägernetzwerk oder dem privaten Netzwerk gemäß dem Entscheidungsergebnis,
wobei das System ferner umfasst:
eine Einrichtung (102) zum Empfang eines Signals von einer Mobilstation oder dem Trägernetzwerk, und
eine Einrichtung (104) zur Verwaltung einer Registrierung von Mobilstationen, die das System als das private Netzwerk verwenden,
wobei die Verbindungsentscheidungseinrichtung zur Entscheidung, ob das Signal zu einer Mobilstation oder dem Trägernetzwerk zu übertragen ist, auf der Grundlage der Registrierung von Mobilstationen betreibbar ist, und
die Einrichtung zur Verbindung zur Übertragung des Signals zu der Mobilstation oder dem Trägernetzwerk auf der Grundlage des Entscheidungsergebnisses der Verbindungsentscheidungseinrichtung betreibbar ist.

## Revendications

1. Station de base (100) destinée à une utilisation dans un système de communication par connexion à réseaux multiples, **caractérisée en ce qu'**elle comprend :
un moyen de décision de connexion (104, 106) destiné à décider si une station mobile doit être connectée à un réseau d'une entreprise de télécommunications ou à un réseau privé, et
un moyen (108, 114) destiné à connecter la station mobile au réseau d'entreprise de télécommunications ou au réseau privé selon le résultat de la décision,
dans laquelle la station de base comprend en outre :
un moyen (102) destiné à recevoir un signal depuis une station mobile ou le réseau d'entreprise de télécommunications, et
un moyen (104) destiné à gérer l'enregistrement des stations mobiles qui utilisent la station de base en tant que réseau privé,
dans laquelle ledit moyen de décision de connexion peut fonctionner pour prendre une décision sur la base de l'enregistrement des stations mobiles, de ce que le signal doit être émis vers une station mobile ou vers le réseau d'entreprise de télécommunications, et
le moyen de connexion peut fonctionner pour émettre le signal vers la station mobile ou vers le réseau d'entreprise de télécommunications sur la base du résultat de la décision du moyen de décision de connexion.

2. Station de base selon la revendication 1, dans laquelle
la station de base comprend en outre un moyen de décision de zone de desserte (106) destiné à décider d'une zone de desserte sur la base du signal, et
le moyen de décision de connexion peut fonctionner pour décider sur la base de l'enregistrement des stations mobiles et sur le résultat de la décision du moyen de décision de zone de desserte, si le signal doit être émis vers une station mobile ou vers le réseau d'entreprise de télécommunications.

3. Station de base selon la revendication 1 ou 2, dans laquelle le moyen de décision de connexion peut fonctionner pour émettre le signal vers le réseau d'entreprise de télécommunications si une station mobile, qui représente la destination du signal, n'est pas enregistrée dans le moyen de gestion.

4. Station de base selon l'une quelconque des revendications 1 à 3, dans laquelle le moyen de réception reçoit un signal depuis une station mobile.

5. Station de base selon l'une quelconque des revendications 1 à 3, dans laquelle le moyen de réception reçoit un signal depuis le réseau d'entreprise de télécommunications.

6. Station de base selon l'une quelconque des revendications 1 à 5, dans laquelle
la station de base comprend en outre un moyen (102) destiné à recevoir une demande d'enregistrement pour utiliser la station de base en tant que réseau privé depuis une station mobile, et
le moyen de gestion gère l'enregistrement de la station mobile qui émet la demande d'enregistrement.

7. Procédé de connexion destiné à une utilisation dans une station de base (100) en vue d'une utilisation dans un système de communication par connexion à réseaux multiples, la station de base comprenant un moyen (104) destiné à gérer l'enregistrement des stations mobiles qui utilisent la station de base en tant que réseau privé, le procédé étant **caractérisé en ce qu'**il comprend :
une étape de décision de connexion consistant à décider si une station mobile doit être connectée à un réseau d'entreprise de Communications ou au réseau privé, et
une étape consistant à connecter la station mobile audit réseau d'entreprise de communication ou au réseau privé selon le résultat de la décision,
dans lequel le procédé comprend en outre une étape (S502) consistant à recevoir un signal depuis une station mobile ou depuis le réseau d'entreprise de télécommunications,
dans lequel l'étape de décision de connexion décide (S504), sur la base de l'enregistrement des stations mobiles, si le signal doit être émis vers une station mobile ou vers le réseau d'entreprise de télécommunications, et
l'étape de connexion émet (S512) le signal vers la station mobile ou vers le réseau d'entreprise de télécommunications sur la base du résultat de la décision de l'étape de décision de connexion.

8. Procédé selon la revendication 7, dans lequel
le procédé comprend en outre une étape de décision de zone de desserte (S506) consistant à décider d'une zone de desserte sur la base du signal, et
l'étape de décision de connexion décide, sur la base de l'enregistrement des stations mobiles et du résultat de la décision de l'étape de décision de zone de desserte, si le signal doit être émis vers une station mobile ou vers le réseau d'entreprise de télécommunications.

9. Procédé selon la revendication 7 ou 8, dans lequel l'étape de décision de connexion émet le signal vers le réseau d'entreprise de télécommunications si une station mobile, qui représente la destination du signal, n'est pas enregistrée dans le moyen de gestion.

10. Procédé selon l'une quelconque des revendications 7 à 9, dans lequel l'étape de réception reçoit un signal depuis une station mobile.

11. Procédé selon l'une quelconque des revendications 7 à 9, dans lequel l'étape de réception reçoit un signal depuis le réseau d'entreprise de télécommunications.

12. Procédé selon l'une quelconque des revendications 7 à 11, dans lequel
le procédé comprend en outre une étape (S602) consistant à recevoir une demande d'enregistrement pour utiliser la station de base en tant que réseau privé depuis une station mobile, et
le moyen de gestion gère (S610) l'enregistrement de la station mobile qui émet la demande d'enregistrement.

13. Système de communication par connexion à réseaux multiples comprenant une station de base, la station de base étant **caractérisée en ce qu'**elle comprend :
un moyen de décision de connexion (104, 106) destiné à décider si une station mobile doit être connecté à un réseau d'entreprise de télécommunications ou à un réseau privé, et
un moyen (108, 114) destiné à connecter la station mobile au réseau d'entreprise de télécommunications ou au réseau privé selon le résultat de la décision,
dans lequel le système comprend en outre :
un moyen (102) destiné à recevoir un signal depuis une station mobile ou le réseau d'entreprise de télécommunications, et
un moyen (104) destiné à gérer l'enregistrement des stations mobiles qui utilisent le système en tant que réseau privé,
dans lequel le moyen de décision de connexion peut fonctionner pour décider sur la base de l'enregistrement des stations mobiles, si le signal doit être émis vers une station mobile ou le réseau d'entreprise de télécommunications, et
le moyen de connexion peut fonctionner pour émettre le signal vers la station mobile ou vers le réseau d'entreprise de télécommunications sur la base du résultat de la décision du moyen de décision de connexion.
